# EUROPEAN PATENT APPLICATION

(11) **EP 4 261 633 A1**
(43) Date of publication of application: **18.10.2023**
(21) Application number: 22167610.9
(22) Date of filing: 11.04.2022
(51) Int. Cl.: G05B 19/418

(54) **METHOD AND DEVICES FOR USE IN A PROCESS INDUSTRY**

(71) Applicant: ABB SCHWEIZ AG, 5400 Baden (CH)
(72) Inventor: HANSSON, Rikard, 41766 Göteborg (SE); THORUD, Elise, 0175 Oslo (NO); LEDUNG, Lars, 722 46 Västerås (SE)
(74) Representative: Kransell & Wennborg KB

(57) **Abstract**

A method for use in a process industry is provided. The method is performed in a control system controlling one or more industrial production processes in the process industry, each process comprising a number of sequences of pre-programmed actions. The method comprises running at least one simulation automation sequence as a background program while running automation sequences controlling the one or more processes, where the simulation sequence is identical to the sequence that is actually controlling the plant, receiving an input for the at least one running simulation automation sequence, and outputting data relating to the outcome of running the one or more simulation automation sequences, providing the operator with decision basis by an expected outcome of the corresponding automation sequence.

## Description

### Technical field

The technology disclosed herein relates generally to the field of control systems in process industries, and in particular to a method and a system for use in a process industry.

### Background

In an industrial process, such as a chemical or petrochemical industry, biotechnology industry, power plant, where raw materials are transformed into materials or intermediates having new properties and/or functionalities and/or energy. Continuous processes in the production are controlled by a control system, e.g., an autonomous control system, which is designed to function under uncertainties in the system and environment for long periods of time. In an intelligent autonomous control system, techniques from the field of artificial intelligence (AI) may be used to achieve the autonomy.

In the control system controlling a process industry plant, complex automation sequences are triggered by an operator based on measurements or by commonly occurring plant upsets such as pressure changes in a well, partial electricity outages (known as brownouts), reduced power from wind farms etc. With increased autonomy the frequency of operator interactions is reduced, which may lead to a lower understanding of the plant operation and risks related thereto. In worst case such reduced operator skills may in turn cause shutdowns and lost production.

### Summary

A general objective of the present invention is to improve various aspects of control systems for controlling production processes. A particular objective is to enable a safe and reliable method for controlling processes of a process industry. Another particular objective is to ensure that an operator supervising a control system for a process industry is provided a thorough understanding of the processes. Still another objective is to increase the process control knowledge of the operator by providing means for testing outcomes of various actions before performing a respective action on the actual plant control.

These objectives, and others, are according to a first aspect achieved by a method for use in a process industry. The method is performed in a control system arranged to control one or more industrial production processes in the process industry, wherein each process comprises a number of sequences of pre-programmed actions. The method comprises running at least one simulation automation sequence as a background program while running automation sequences controlling the one or more processes. The at least one simulation sequence is identical to a corresponding automation sequence that is controlling the process. An input for the at least one running simulation automation sequence is received, and data relating to the outcome of running the one or more simulation automation sequences is output. This provides the operator with decision basis in the form of an expected outcome of the corresponding automation sequence controlling the process.

The method provides a number of advantages. For instance, by means of the method an operator is enabled to test an outcome of various actions before actually performing the action in the corresponding control sequence. The operator may obtain warnings when autonomy is compromised and is enabled to intervene early to correct any problems, and/or bring in experts timely to correct the sequences. As any weaknesses of the sequences can be detected early, process shutdowns and blackouts can be avoided. Sequences leading to non-optimal production can be improved ahead of activation, increasing productivity and product quality, while reducing costs for energy and material.

These objectives, and others, are according to a second aspect achieved by computer program for use in a control system controlling one or more processes of a process industry. Each process comprises a number of sequences of pre-programmed actions and the computer program comprises computer program code, which, when executed on at least one processor on the control system causes the control system to perform the method according to the first aspect.

These objectives, and others, are according to a third aspect achieved by a computer program product comprising a computer program according to the second aspect and a computer readable means on which the computer program is stored.

These objectives, and others, are according to a fourth aspect achieved by a control system for use in a process industry. The control system controls one or more processes of the process industry, each process comprising a number of sequences of pre-programmed actions. The control system is configured to run at least one simulation automation sequence as a background program while running automation sequences controlling the one or more processes, wherein the at least one simulation sequence is identical to a corresponding automation sequence controlling the process; to receive an input for the at least one running simulation automation sequence, and to output data relating to the outcome of running the one or more simulation automation sequences, providing the operator with decision by an expected outcome of the corresponding automation sequence.

Further features and advantages of the present teachings will become clear upon reading the following description and the accompanying drawings.

### Brief description of the drawings

Figure 1 illustrates a process control system.
Figure 2 illustrates sequences on a control system and identical sequences on a simulator.
Figure 3 is a flow chart over steps of a method according to an aspect of the invention.
Figure 4 is a schematic diagram showing functional units of a controller according to an embodiment.
Figure 5 shows an example of a computer program product comprising computer readable storage medium according to an embodiment.

### Detailed description

In the following description, for purposes of explanation and not limitation, specific details are set forth such as particular architectures, interfaces, techniques, etc. in order to provide a thorough understanding. In other instances, detailed descriptions of well-known devices, circuits, and methods are omitted so as not to obscure the description with unnecessary detail. Same reference numerals refer to same or similar elements throughout the description.

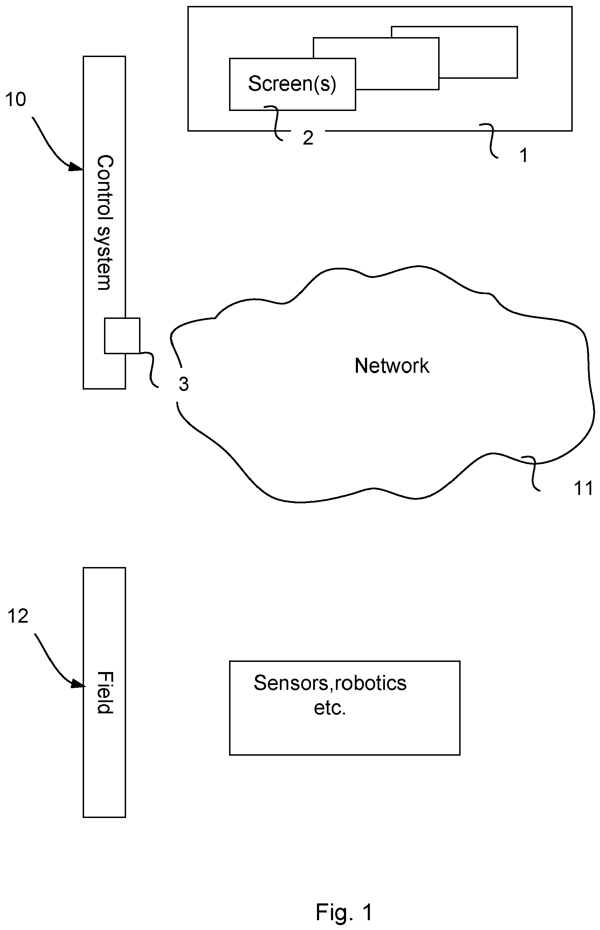

Figure 1 illustrates a highly simplified control system 10 for controlling an industrial process, e.g., a power plant, which is used in the following as an example. The control system 10 executes processes to achieve a particular function or workflow. Automated features may be programmed so that one action triggers further related actions. The process may be seen as a sequence of pre-programmed actions. The control system 10 may, but need not, be an autonomous control system, in which the control system 10 has at least some ability for self-government. Such self-governance enables the control system 10 to perform some necessary control functions without external intervention.

The control system 10 may be arranged in and connected to devices of a control room 1, in which an operator supervises the industrial processes. Such control room 1 typically comprises one or more display devices 2 interconnected to the control system 10 and enabling an operator to supervise the processes. Generally, a control system may be divided into several parts: a supervisory and control human-machine system, data server(s) and management system, maintenance tools, and possibly also a remote support system. The control system 10 of the present system is mainly related to the supervisory and control human-machine system and may comprise a number of various devices needed for controlling the process. Typically, a system network 11 interconnects these parts, preferably a high-speed system network having redundancy. The control system 10 may, for instance, comprise computers interconnected over the system network 11, for instance a Local Area Network (LAN), servers, Input/Output (I/O) for data flows, interfaces, high-performance controllers, intelligent Programmed Input/Output (PI/O), remote I/O communicating with devices such as turbine generators, feed water pump, boilers, gas turbines etc. Many details of such devices are omitted herein as they are well known by the persons skilled in the art.

The control system 10 comprises one or more controllers 3 arranged to control various industrial processes. The control system 10 may comprise sensors, instruments, actuators, robotics etc. in the process industry for measuring various parameters and controlling positions and/or orientations of the robotics. The controller 3 may receive input from such sensors instruments, actuators, and industrial robots, and also control positions and orientations of the industrial robots.

It is realized that different industrial process comprises different types of devices from which such controller 3 receives data and which it may control.

An operator supervises and/or interacts with the control system 10. He may monitor information shown on the display devices 2, the information being any of a variety of information on the industrial process, e.g. as provided from sensors. The information is preferably collected and displayed in real time.

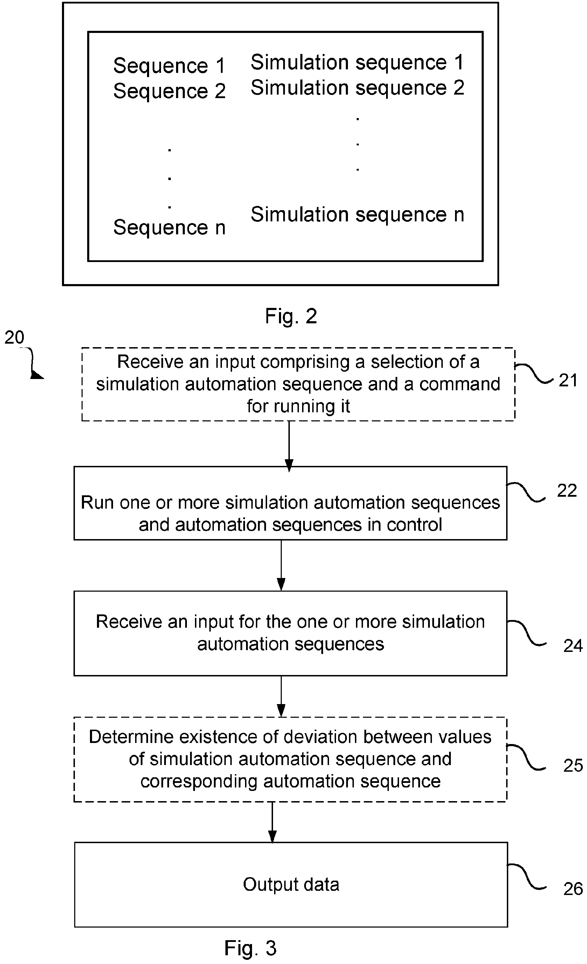

Figure 2 illustrates sequences and simulation sequences. It is noted that "sequence" and "automation sequence" are used interchangeably herein. According to the present invention, multiple simulation sequences (Simulation sequence 1, ..., Simulation sequence n) are run in the background while also the corresponding controlling sequences (Sequence 1, ..., Sequence n) are run. The simulation sequences are run in the background on a simulator. The simulator may be seen as a representation of an industrial process and its control system in the form of a software installed on physical hardware, firmware, software server and/or in a cloud environment. The simulator may be a computer package, which enables the simulation of the industrial processes to be run in the background while simultaneously running the sequences that are controlling the processes. However, the simulator may alternatively be a device or system that runs the simulation sequences. The simulation sequences are based on the industrial processes' current state, which is thus the online simulator state. The simulation sequence is identical to the sequence that is actually controlling the industrial process. The simulation sequence enables the operator to try out different scenarios and various actions in real-time, while the actual controlling sequence is running.

Figure 3 is a flow chart over steps of a method 20 according to an aspect of the invention. A method 20 is provided for use in a process industry, and in particular for controlling the processes of the process industry. The method 20 may also be used for various other tasks: for supervising the process, for training operators, for predicting plant operation, and may, for instance, involve alerting the operator when supervised values are heading outside a set operational window or deviates from an expected sequence result.

The method 20 may be performed in a control system 10, e.g., as described earlier, that is arranged to control one or more industrial production processes in the process industry. As noted earlier, each such process comprises a number of sequences of pre-programmed actions. Examples of such pre-programmed actions comprise: production startup, production shutdown, partial production shutdown, bring process areas offline for maintenance and then back online, change target production rate, open wells according to actual well characteristics, change target product to mention a few.

The method 20 comprises running 22 at least one simulation automation sequence as a background program on a simulator while running automation sequences controlling the one or more processes. As noted earlier, each simulation automation sequence is identical to a corresponding automation sequence in control.

In some embodiments, the method 20 may comprise, before the step of running, receiving 21 an input comprising a selection of a simulation automation sequence, and a command for running the selected simulation automation sequence. This is an optional step, as indicated by the dashed lines of step 21 in figure 3.

The method 20 comprises receiving 24 an input for the at least one running simulation automation sequence. The input may be the same as that the actual automation sequence receives, or it may be an exclusive input, for instance, in order to find out how certain values would affect the process.

The method 20 comprises outputting 26 data relating to the outcome of running the one or more simulation automation sequences. This provides the operator with, for instance, decision basis by an expected outcome of the corresponding actual automation sequence. The output may be any of any type, e.g. deviations from expected values, information, production data, alarms and events to mention a few.

In some embodiments, the method 20 may comprise, prior to the step of outputting 26, determining 25 whether a deviation exists between a value of the simulation automation sequence and the corresponding value of the automation sequence, and wherein the output data comprises a result of the determination. This is an optional step, as indicated by the dashed lines of step 25 in figure 3.

The method provides a number of advantages. For instance, by means of the method, an operator is enabled to test the outcome of various actions before actually performing the action in the corresponding automation sequence. The operator may obtain warnings when autonomy is compromised and is enabled to intervene early to correct any problems, and/or bring in experts timely to correct the sequences. As any weaknesses of the sequences can be detected early, process shutdowns can be avoided. Sequences leading to non-optimal production can be improved ahead of activation, increasing productivity and product quality, while reducing costs for energy and material costs as well as reducing environmental impact.

The one or more simulation automation sequences may be run based on the current state of the one or more processes. At least one simulation automation sequence is preferably run faster than the corresponding automation sequence that is controlling the same one or more processes and both are run in real-time. This enables the operator to test various scenarios and see their respective outcomes. This provides the operator time to decide whether or not to apply the scenario to the actual automation sequence.

In various embodiments, the at least one simulation automation sequence is run on a simulator as a background program on a simulator, examples on which has been given earlier.

In various embodiments, the method comprises validating a parameter of a production plan set for the industrial production process. The validation is performed by running one or more simulation automation sequences related to the parameter. For example, the production plan may state the production should be increased by 5 %. Simulation automation sequences that are relevant for increases of production, for instance material cost, material availability, etc. are then run on the simulator to validate that the production increase is indeed feasible.

In various different embodiments, the method comprises, prior to the step of outputting, determining whether a deviation exists between a value of the simulation automation sequence and the corresponding value of the automation sequence, and wherein the output data comprises a result of the determination. This gives the operator early warnings of deviations and enables him to take early action. A deviation may, for instance, be one or more of: a value outside an operational window, a value that differs from an expected sequence result, a result outside configured alarm limits, which indicates that the operator may need to take some action, or, as a last example, a value indicating risk of causing a shutdown of the processes, which might trigger alarms.

In various embodiments the method comprises creating a model for long-term predictions by applying machine learning. In order to speed up the simulation, machine learning may be applied to previous simulations results. A self-learning system may avoid repeating previous mistakes.

In various embodiments the method comprises, before the step of running, receiving an input comprising a selection of a simulation automation sequence, and a command for running the selected simulation automation sequence.

In various embodiments, the data relating to the outcome of running the simulation automation sequence is one or more of: result of a pre-programmed action of the simulation automation sequence; a value outside an operational window; a result differing from an expected sequence result; a result outside configured range; a value indicating risk of causing a shutdown of the processes.

In various embodiments, the method comprises alerting an operator when the output result indicates a deviation being detected. The alerting may, for instance, comprise one or more of: sound, light, vibrating alarm, alarms on operator station, icons on operator graphic displays and faceplates, any kind of notification on dedicated dashboard.

In order to ensure the proper functioning of the control system 10, its autonomy has to be validated continuously.

The method 20 that has been described may be implemented in the described control system 10. A corresponding control system 10 is thus also provided for use in a process industry. The control system 10 may comprise one or more controllers 3 arranged to control various processes of the power plant. In some embodiments the method that has been described in various embodiments may be implemented in a single controller of the control system 10. In other embodiments the method 20 may be implemented in a distributed manner, e.g., in two or more controllers 3 of the control system 10. The control system 10 controls one or more processes of the process industry, each process comprising a number of sequences of pre-programmed actions. The control system 10 is configured to: run at least one simulation automation sequence as a background program while running automation sequences controlling the one or more processes; to receive an input for the at least one running simulation automation sequence, and to output data relating to the outcome of running the one or more simulation automation sequences, providing the operator with decision basis for expected outcome of the corresponding automation sequence.

In an embodiment, the control system 10 is configured to run the at least one simulation automation sequence based on the current state of the one or more processes.

In a variation of the above embodiment, the control system 10 is configured to run the at least one simulation automation sequence faster than the corresponding automation sequence run in real-time.

In various embodiments, the control system is configured to, prior to outputting, determine whether a deviation exists between a value of the simulation automation sequence and the corresponding value of the automation sequence, and wherein the output data comprises a result of the determination.

In variations of the above embodiment, the deviation comprises one or more of: value outside an operational window; differing from an expected sequence result; result outside configured alarm limits; value indicating risk of causing a shutdown of the processes.

In various embodiments, the control system is configured to create a model for long-term predictions by applying machine learning.

In various embodiments, the control system is configured to receive, before the step of running 22, an input comprising a selection of a simulation automation sequence, and a command for running the selected simulation automation sequence.

In various embodiments, the data relating to the outcome of running the simulation automation sequence is one or more of: result of a pre-programmed action of the simulation automation sequence; a value outside an operational window; a result differing from an expected sequence result; a result outside configured range; a value indicating risk of causing a shutdown of the processes.

In various embodiments, the control system is configured to alert an operator when the output result indicates a deviation being detected.

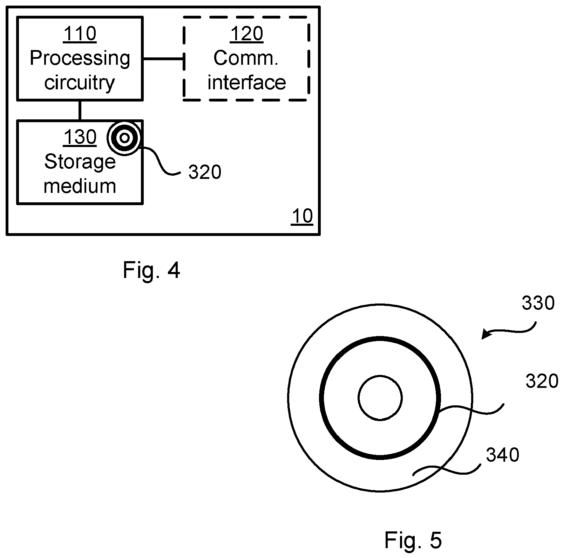

Fig. 4 schematically illustrates, in terms of a number of functional units, the components of a control system 10 according to an embodiment. Processing circuitry 110 is provided using any combination of one or more of a suitable central processing unit (CPU), multiprocessor, microcontroller, digital signal processor (DSP), etc., capable of executing software instructions stored in a computer program product (as in Fig. 5), e.g., in the form of a storage medium 130. The processing circuitry 110 may further be provided as at least one application specific integrated circuit (ASIC), or field programmable gate array (FPGA).

Particularly, the processing circuitry 110 is configured to cause the process control system 10 to perform a set of operations, or actions, as disclosed herein. For example, the storage medium 130 may store the set of operations, and the processing circuitry 110 may be configured to retrieve the set of operations from the storage medium 130 to cause the control system 10 to perform the set of operations. The set of operations may be provided as a set of executable instructions. The processing circuitry 110 is thereby arranged to execute the various embodiments of the method 20 as disclosed herein.

The storage medium 130 may also comprise persistent storage, which, for example, can be any single one or combination of magnetic memory, optical memory, solid state memory or even remotely mounted memory.

The control system 10 may further comprise a communications interface 120 for communications with other entities, functions, nodes, and devices, over the interfaces. As such the communications interface 120 may comprise one or more transmitters and receivers, comprising analogue and digital components.

The processing circuitry 110 controls the general operation of the control system 10 e.g., by sending data and control signals to the communications interface 120 and the storage medium 130, by receiving data and reports from the communications interface 120, and by retrieving data and instructions from the storage medium 130. Other components, as well as the related functionality, of the control system 10 are omitted in order not to obscure the concepts presented herein.

Fig. 5 shows one example of a computer product comprising computer readable storage medium according to an embodiment. On this computer readable means 340, a computer program 320 can be stored, which computer program 320 can cause the processing circuitry 110 and thereto operatively coupled entities and devices, such as the communications interface 120 and the storage medium 130, to execute methods according to embodiments described herein. The computer program 320 and/or computer program product 330 may thus provide means for performing any actions of the control system 10, and controller(s) 3 as disclosed herein. On this computer readable means 330, a computer program 320 can be stored, which computer program 320 can cause the processing circuitry 110 and thereto operatively coupled entities and devices, such as the communications interface 120 and the storage medium 130, to execute methods according to embodiments described herein. The computer program 320 and/or computer program product 330 may thus provide means for performing any actions of the process control system 12 as herein disclosed.

In the example of Fig. 5, the computer program product 330 is illustrated as an optical disc, such as a CD (compact disc) or a DVD (digital versatile disc) or a Blu-Ray disc. The computer program product 330 could also be embodied as a memory, such as a random-access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 320 is here schematically shown as a track on the depicted optical disk, the computer program 320 can be stored in any way which is suitable for the computer program product 330.

The invention has mainly been described herein with reference to a few embodiments. However, as is appreciated by a person skilled in the art, other embodiments than the particular ones disclosed herein are equally possible within the scope of the invention, as defined by the appended patent claims.

## Claims

1. A method (20) for use in a process industry, the method (20) being performed in a control system (10) controlling one or more industrial production processes in the process industry, each process comprising a number of sequences of pre-programmed actions, the method (20) being **characterized by**
- running (22) at least one simulation automation sequence as a background program while running automation sequences controlling the one or more processes, wherein the at least one simulation sequence is identical to a corresponding automation sequence controlling the process,
- receiving (24) an input for the at least one running simulation automation sequence, and
- outputting (26) data relating to the outcome of running the one or more simulation automation sequences, providing the operator with decision basis by an expected outcome of the corresponding automation sequence.

2. The method (20) as claimed in claim 1, wherein the at least one simulation automation sequence is run based on the current state of the one or more processes.

3. The method (20) as claimed in claim 2, wherein the at least one simulation automation sequence is run faster than the corresponding automation sequence controlling the one or more processes and run in real-time.

4. The method (20) as claimed in any of the preceding claims, wherein the at least one simulation automation sequence is run on a simulator as a background program.

5. The method (20) as claimed in any of the preceding claims, comprising validating a parameter of a production plan set for the industrial production process by running one or more simulation automation sequences related to the parameter.

6. The method (20) as claimed in claim any of the preceding claims, comprising, prior to the step of outputting (26):
- determining (25) whether a deviation exists between a value of the simulation automation sequence and the corresponding value of the automation sequence, and wherein the output data comprises a result of the determination.

7. The method (20) as claimed in any of the preceding claims, comprising
- receiving (21), before the step of running (22), an input comprising a selection of a simulation automation sequence, and a command for running the selected simulation automation sequence.

8. A computer program (320) for a control system (10) controlling one or more processes of a process industry, each process comprising a number of sequences of pre-programmed actions, the computer program (320) comprising computer program code, which, when executed on at least one processor on the control system (10) causes the control system (10) to perform the method (20) according to any of claims 1-7.

9. A computer program product (330) comprising a computer program (320) as claimed in claim 8 and a computer readable means on which the computer program (320) is stored.

10. A control system (10) for use in a process industry, the control system (10) controlling one or more processes of the process industry, each process comprising a number of sequences of pre-programmed actions, **characterized by** the control system (10) being configured to:
run at least one simulation automation sequence as a background program while running automation sequences controlling the one or more processes, wherein the at least one simulation sequence is identical to a corresponding automation sequence controlling the process,
receive an input for the at least one running simulation automation sequence, and
output data relating to the outcome of running the one or more simulation automation sequences, providing the operator with decision basis by an expected outcome of the corresponding automation sequence.

11. The control system (10) as claimed in claim 10, configured to run the at least one simulation automation sequence based on the current state of the one or more processes.

12. The control system (10) as claimed in claim 11, configured to run the at least one simulation automation sequence faster than the corresponding automation sequence run in real-time.

13. The control system (10) as claimed in any of claims 10 - 12, wherein the at least one simulation automation sequence is run on a simulator as a background program.

14. The control system (10) claimed in any of claims 10 - 13, comprising validating a parameter of a production plan set for the industrial production process by running one or more simulation automation sequences related to the parameter.

15. The control system (10) as claimed in any of claims 10 - 14, configured to receive, before the step of running (22), an input comprising a selection of a simulation automation sequence, and a command for running the selected simulation automation sequence.
